# DEMANDE DE BREVET EUROPEEN

(11) **EP 1 450 532 A1**
(43) Date de publication de la demande: **25.08.2004**
(21) Numéro de dépôt: 04290331.0
(22) Date de dépôt: 09.02.2004
(51) Int. Cl.: H04L 27/34, H04L 25/03

(54) **Procédé et dispositifs de filtrage de paquets de données encapsulés par troncature de la puissance utile des symboles de bord des paquets**

(30) Priorité: 18.02.2003 FR 0301913
(71) Demandeur: ALCATEL, 75008 Paris (FR)
(72) Inventeur: Romann, Brigitte, 92500 Rueil-Malmaison (FR); Aubert, Pascal, 31240 St Jean (FR); Gallet, Thibault, 31330 Launac (FR); Mateus, Jean-Michel, 31000 Toulouse (FR); Portier, Marc, 31270 Cugnaux (FR)
(74) Mandataire: Hedarchet, Stéphane

(57) **Abrégé**

Un procédé est dédié au filtrage de paquets de données d'un réseau de communications dans lequel chaque paquet comprend des symboles utiles encapsulés dans un cadre de couche physique comportant, d'une part, des échantillons, dits primaires, représentatifs de symboles de temps de montée et de descente, et d'autre part, des échantillons, dits secondaires, représentatifs de symboles de référence, les échantillons primaires étant placés en amont et/ou en aval de chaque paquet encapsulé. Ce procédé consiste, chaque fois que l'on reçoit un paquet de données encapsulé, à tronquer la puissance utile bruitée des échantillons primaires représentatifs de l'un au moins des symboles primaires placés en amont et/ou en aval du paquet reçu, afin d'obtenir pour chaque symbole k du paquet reçu une énergie par symbole Esₖ telle que le rapport Esₖ/N₀, en sortie d'un module de filtrage (MFR) d'un démodulateur (DM1) du réseau, soit sensiblement constant quel que soit le symbole du paquet reçu. En émission, on peut également tronquer la puissance à émettre, gagnant ainsi en efficacités énergétique et spectrale de transmission.

## Description

L'invention concerne le domaine des communications paquets entre terminaux d'un réseau de communications, et plus particulièrement les filtrages de paquets de données encapsulés pendant les phases d'émission et/ou de réception.

Comme le sait l'homme de l'art, la transmission de paquets de données par modulation à plusieurs états de phase mono-amplitude (ou M_PSK pour « M_ary Phase Shift Keying ») ou multi-amplitudes/phases (ou QAM pour « Quadrature Amplitude Modulation ») d'une fréquence porteuse nécessite l'encapsulation de chaque paquet dans un cadre (ou « overhead ») de transmission, correspondant à la couche physique de transport, de niveau un (1) dans le modèle en couches OSI.

Ce cadre assure la délimitation des ressources temporelle et fréquentielle occupées par le paquet, tout en permettant à un démodulateur de s'accrocher, ou en d'autres termes de récupérer le rythme symbole et l'heure (ou position) du paquet auquel il est associé et les paramètres de la porteuse (phase et fréquence). Il comprend à cet effet des échantillons représentatifs de symboles réservés aux temps de montée et aux temps de descente du filtre canal, dits symboles primaires, situés de part et d'autre du paquet, et des échantillons représentatifs de symboles de référence, dits symboles secondaires, situés à l'intérieur du paquet.

Le nombre et la position des symboles secondaires à l'intérieur du paquet définissent la qualité d'acquisition du paquet (mesurée en termes de « Probabilité de Non Détection » et de « Probabilité de Fausse Alarme ») et la qualité de restitution du paquet (mesurée notamment en termes de « taux d'erreur symbole », ou de « taux d'erreur binaire » ou de « taux d'erreur paquets »).

Les nombres de symboles primaires placés en amont et en aval d'un paquet sont généralement les mêmes. Ils dépendent des caractéristiques du filtrage « canal » retenu pour la transmission. Ce filtrage canal est constitué généralement de deux filtres, l'un appelé filtrage d'émission, effectué dans l'émetteur après la fonction de modulation proprement dite, et l'autre appelé filtrage de réception, effectué dans le récepteur avant la fonction de démodulation proprement dite, dédiée à la récupération du rythme et de la porteuse et à la prise de décision sur les symboles.

Les filtres utilisés sont le plus souvent des filtres linéaires à réponses impulsionnelles finies. Ils réalisent chacun un produit de convolution entre le signal entrant et leur propre réponse impulsionnelle temporelle. De tels filtres permettent l'adaptation du signal au canal de transmission considéré, en maximisant le rapport Signal à Bruit (ou SNR pour « Signal to Noise Ratio ») au niveau du récepteur.

En raison des produits de convolution réalisés, ces filtres induisent des temps de montée et de descente, dont la globalisation donne généralement une durée équivalente de 1,5 à 4 symboles de part et d'autre du paquet.

La place réservée aux temps de montée et de descente des filtres, évaluée en nombre de symboles, est appelée symboles primaires. Ces symboles primaires encadrent les paquets de payload, contenant des symboles « utiles », représentatifs des données d'information encodées éventuellement par des codes correcteurs d'erreurs, et des symboles de référence, également appelés symboles secondaires, de valeurs et de positions connues, permettant d'amorcer ou de réaliser les estimations des paramètres de modulation au sein du démodulateur. Grâce aux symboles primaires, tous ces symboles de « payload » (symboles utiles et symboles secondaires) sont émis avec une énergie constante et une bande de fréquence constante, quelles que soient leurs positions respectives au sein dudit paquet. Ainsi, en présence d'un bruit stationnaire large bande de densité de puissance constante, le rapport de l'énergie d'un symbole Es sur la densité spectrale de puissance de bruit N₀ (Es/N₀) est sensiblement constant quelle que soit la position du symbole de payload dans le paquet. Le taux d'erreur est de ce fait également sensiblement constant.

Cependant, les temps de montée et de descente des filtres induisent une perte d'efficacité énergétique et spectrale des éléments de la chaîne de transmission, étant donné qu'il faut allouer des ressources temps/fréquence pour les symboles primaires et augmenter le débit de transmission en émission. Or, l'importance relative de cette perte augmente lorsque le nombre de symboles encodés de payload (utiles et secondaires), représentatifs des données d'information d'un paquet, décroît. Plus précisément, lorsque le nombre de symboles de payload d'un paquet devient inférieur ou égal à cent, la perte d'efficacité devient du même ordre de grandeur que la perte induite par l'insertion des symboles de référence, qui est typiquement de l'ordre du demi dB (décibel), lorsque les algorithmes de récupération du rythme symbole et de la phase et de la fréquence de la porteuse sont optimisés et directs. Cette perte d'efficacité est encore renforcée pour les paquets courts du fait que les temps d'établissement des filtres ne dépendent pas de la taille des paquets mais des spécifications de platitude dans la bande de fréquence, du taux de réjection hors de cette bande, voire de la minimisation de la distorsion intersymboles et de la précision de la récupération de rythme du démodulateur.

Cette situation est particulièrement gênante, notamment dans les réseaux de communications satellitaires, du fait de l'intérêt que présentent ces paquets courts encapsulés. Leur utilisation permet en effet, d'une part, de banaliser la couche physique de transport, quels que soient le type des données à transmettre (trafic, données courtes de contrôle, ou données de surveillance, par exemple) et le mode de transmission de ces données (continu ou par sauts de fréquence). Ainsi, des paquets courts encapsulés permettent d'améliorer la souplesse du réseau et la robustesse de la transmission, notamment lorsque les canaux sont perturbés, et facilitent l'uniformisation des équipements de réseau.

L'invention a donc pour but d'améliorer la situation.

Elle propose à cet effet un procédé de traitement de symboles de paquets de données-symboles (ou appelés plus simplement symboles) au sein d'un réseau de communications, concernant les fonctions de filtrage qui dépendent de la position des symboles de payload (utiles et secondaires) dans le paquet.

Plus précisément, le procédé de traitement selon l'invention a notamment pour objet de permettre la diminution du nombre de symboles reçus devant être gérés par un récepteur. Ce nombre de symboles peut être non entier. La granularité en est l'échantillon. Il y a au minimum 2 échantillons par symbole (typiquement 4 à 5 échantillons par symbole). Ce traitement en réception peut être éventuellement associé à un traitement préliminaire en émission destiné à permettre la diminution de la durée du signal, évaluée soit en nombre de symboles émis par le modulateur d'un émetteur, ou évaluée en nombre équivalent d'échantillons en sortie du filtre d'émission, afin de gagner en efficacité de transmission.

A cet effet, le procédé de traitement selon l'invention consiste à tronquer au niveau de la réception la puissance utile bruitée d'une partie au moins du signal correspondant aux symboles primaires des bords des paquets. Cela peut s'effectuer soit par la mise à zéro (0) du niveau d'énergie reçu (ou de la puissance utile bruitée) de certains échantillons constituant lesdits symboles primaires d'un flot incident avant filtrage de réception, soit par la modification des coefficients utilisés dans le filtre de réception pour les échantillons des symboles primaires de bord. Le filtrage en réception des échantillons des symboles utiles appartenant au corps du paquet est réalisé de façon conventionnelle (la réception à puissance et à bande constantes du signal utile continue donc d'être valable dans le corps du paquet).

La réception de la puissance de bruit sur l'énergie reçue étant ainsi tronquée, le procédé de traitement n'influe pratiquement pas sur le critère de performance que constitue le rapport signal à bruit Es/N₀, et par conséquent sur le taux d'erreur symbole du démodulateur, pour les Es/N₀ faibles couramment utilisés.

L'éventuelle partie préliminaire du procédé de traitement selon l'invention concerne le filtrage en émission, comme indiqué précédemment. Elle consiste à tronquer l'émission de la puissance utile des échantillons d'une partie au moins des symboles primaires des bords des paquets. L'émission à puissance et à bande constantes du signal utile des symboles utiles appartenant au corps du paquet reste réalisée de façon conventionnelle.

Ainsi, dans le cas d'une transmission de type mono-porteuse, l'élargissement de la bande de transmission sur les bords des paquets, consécutif à la troncature selon l'invention, n'a pas d'incidence sur le taux d'erreur en réception, puisque le récepteur n'utilise pas les symboles primaires dont la puissance utile a été tronquée. Dans le cas d'une transmission de type multi-porteuses, l'élargissement de la bande de transmission sur les bords de paquets, consécutif à la troncature selon l'invention, n'a pas d'incidence notable sur le taux d'erreur en réception (si une telle incidence était perçue, on pourrait néanmoins y remédier en contrôlant l'établissement de ce que l'homme de l'art appelle le plan multifréquences/TDMA ; ce dernier ne constituant plus une mesure conservatoire au niveau de la spécification de la Forme d'onde du modem).

Pour émettre un paquet bénéficiant de la diminution de l'allocation des symboles primaires, on peut effectuer un filtrage analogique ou semi-analogique classique à l'aide d'un montage de type « push-pull » offrant un recouvrement temporel entre les temps de montée et les temps de descente, compte tenu d'un temps de garde choisi entre paquets encapsulés consécutifs. En variante, on peut effectuer un filtrage numérique, de durée modulable, par exemple à l'aide d'un module à synthétiseur numérique direct (ou DDS pour « Direct Digital Synthesizer »).

L'invention permet ainsi de diminuer l'allocation statique des ressources temps/fréquence réservées aux temps de montée et de descente du filtrage de canal, définis par les symboles primaires placés en amont et en aval (bords) des paquets encapsulés, sans perte sensible de qualité de réception en termes de taux d'erreur et de platitude de ce taux d'erreur. Cette diminution peut même aller jusqu'à une suppression complète.

L'invention porte en outre sur un premier dispositif de filtrage de paquets de données-symboles (ou symboles) reçus, pour un démodulateur de réseau de communications, chaque paquet comportant des symboles utiles encapsulés dans un cadre de couche physique comportant des échantillons primaires et des échantillons secondaires, lesdits échantillons primaires étant placés en amont et/ou en aval (ou bords) de chaque paquet encapsulé, et le premier dispositif comportant des moyens de filtrage de symboles contenus dans des paquets reçus.

Ce premier dispositif (ou filtre de réception) se caractérise par le fait qu'il comprend des moyens de traitement chargés, lorsqu'un paquet de données encapsulé est reçu, de tronquer la puissance reçue bruitée d'une partie au moins des symboles primaires des bords des paquets, de manière à obtenir pour chaque symbole du paquet reçu une énergie par symbole Esₖ telle que le rapport Esₖ/N₀, en sortie des moyens de filtrage, soit sensiblement constant quel que soit le symbole du paquet reçu.

Cette troncature peut s'effectuer soit par la mise à zéro (0) du niveau d'énergie (ou de la puissance utile bruitée) de certains échantillons constituant lesdits symboles primaires d'un flot incident, soit par la modification des coefficients de filtrage utilisés par les moyens de filtrage pour filtrer en réception les échantillons des symboles (primaires) de bord.

Préférentiellement, les moyens de traitement du filtre de réception (ou premier dispositif) sont agencés de manière à ne pas utiliser les échantillons primaires de signal sur leur entrée.

L'invention porte également sur un second dispositif de filtrage de paquets de données-symboles (ou symboles) à émettre, pour un modulateur d'un réseau de communications, chaque paquet comportant des symboles utiles encapsulés dans un cadre de couche physique comportant des échantillons primaires et des échantillons secondaires, lesdits échantillons primaires étant placés en amont et/ou en aval (ou bords) de chaque paquet encapsulé.

Ce second dispositif, agissant sur le filtre d'émission ou sur sa sortie, se caractérise par le fait qu'il comprend des moyens de traitement chargés, lorsqu'un paquet de données encapsulé doit être émis, de tronquer l'émission de la puissance utile (ou énergie) des échantillons primaires représentatifs d'une partie au moins des symboles primaires des bords des paquets, de manière à assurer pour chaque symbole k du paquet de payload filtré une énergie par symbole Esₖ telle que le rapport Esₖ/N₀, en sortie du module de filtrage du démodulateur du modem chargé de recevoir ledit paquet filtré, dont l'un au moins des bords a été traité, soit sensiblement identique pour tous les symboles du paquet reçu.

Dans un mode de réalisation analogique ou semi-analogique, adapté à un filtrage de caractéristiques identiques et de durée constante pour tous les symboles du paquet, les moyens de traitement peuvent comprendre deux synthétiseurs agencés en mode « push-pull » de manière à émettre de façon alternée des paquets encapsulés consécutifs avec un recouvrement temporel choisi entre le temps de descente associé à un paquet et le temps de montée associé au paquet suivant, compte tenu d'un temps de garde choisi entre ces paquets. Dans ce cas, et afin de mettre à un niveau d'énergie (ou de puissance utile) adéquat les échantillons primaires représentatifs de tous les symboles placés en amont et en aval du paquet, les synthétiseurs sont préférentiellement agencés de manière à commencer à constituer le temps de montée d'un paquet encapsulé avant la constitution du temps de descente du paquet précédent.

Lorsque le temps de garde entre ce paquet et le paquet précédent est nul, la fin du temps de montée du paquet coïncide avec le début du temps de descente du paquet précédent. Lorsque le temps de garde TG entre les 2 paquets est non nul, la position du paquet considéré est retardée de la valeur de TG. Une commutation sur charges adaptées ou sur la sortie d'émission des paquets encapsulés permet, par exemple, de n'émettre qu'un seul signal à la fois.

Dans un mode de réalisation numérique, les moyens de traitement peuvent comprendre un synthétiseur numérique direct (DDS) chargé d'effectuer un filtrage numérique de valeurs modulables au moyen de commandes directes de phase, par exemple, en plus de l'ajustement classique de la fréquence porteuse par commandes incrémentales de phase. La commande d'amplitude peut, quant à elle, être réalisée après un convertisseur numérique/analogique associé au DDS.

L'invention porte également, d'une première part, sur un modem comprenant un démodulateur équipé d'un premier dispositif de filtrage (ou filtre de réception) du type de celui présenté ci-avant, et/ou un modulateur équipé d'un second dispositif de filtrage (ou filtre d'émission) du type de celui présenté ci-avant, d'une deuxième part, sur une station de communications (par exemple un terminal de satellite) comprenant un tel modem, d'une troisième part, sur un terminal de communications comprenant un tel modem, et d'une quatrième part, sur un réseau de communications comprenant au moins une telle station de communications.

L'invention est tout particulièrement adaptée à la transmission de données par modulation à plusieurs états de phase et à nombre réduit d'états d'amplitude.

D'autres caractéristiques et avantages de l'invention apparaîtront à l'examen de la description détaillée ci-après, et des dessins annexés, sur lesquels :
- la figure 1 illustre de façon schématique une partie d'un réseau de communications satellitaire comprenant des terminaux de satellite équipés de premier et second dispositifs de filtrage selon l'invention,
- la figure 2 illustre de façon très simplifiée la représentation de signaux représentatifs des symboles d'un paquet encapsulé après filtrage selon un traitement traditionnel,
- la figure 3 illustre de façon très simplifiée la représentation de signaux représentatifs des symboles d'un paquet encapsulé après filtrage selon l'invention, et
- la figure 4 détaille la représentation des signaux élémentaires de chaque symbole k avant sommation au sein d'un paquet encapsulé filtré de la figure 3.

Les dessins annexés pourront non seulement servir à compléter l'invention, mais aussi contribuer à sa définition, le cas échéant.

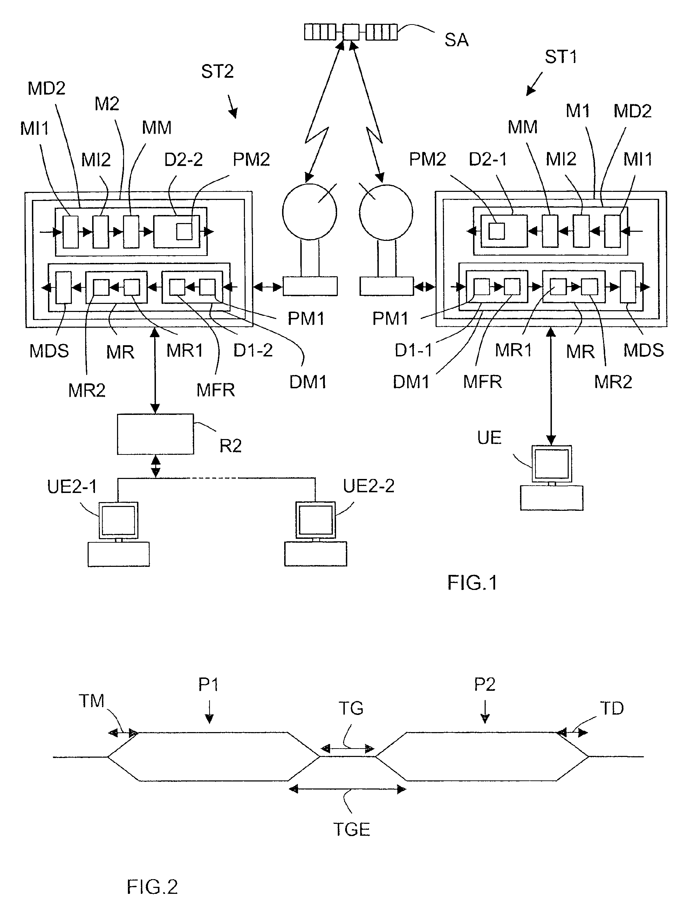

On se réfère tout d'abord à la figure 1 pour décrire, à titre d'exemple illustratif, un réseau de communications de type satellitaire équipé d'un dispositif selon l'invention.

Bien entendu, l'invention n'est pas limitée à ce type de réseau. Elle concerne en effet tous les types de réseau capables d'effectuer un filtrage des cadres (ou « overheads ») de couche physique de transport (de niveau un (1) dans le modèle en couches OSI) qui encapsulent des paquets de données courts échangés entre terminaux et dont le rapport Signal à Bruit est généralement faible. Cela concerne notamment les réseaux sans fil, comme par exemple les réseaux locaux sans fil (ou WLAN pour « Wireless Local Area Network »), les boucles locales radio (ou BLR), et les accès hertziens points à multipoints définis dans les systèmes de type LMDS, mais également les réseaux IP sans fil et le MMDS.

On entend ici par « terminal », tout équipement de réseau, et notamment les équipements d'utilisateurs, tels que les ordinateurs fixes ou portables, les téléphones fixes ou mobiles, les routeurs ou les serveurs.

Le réseau de communications satellitaire illustré comprend, de façon très schématique, une multiplicité de stations de communications STi (ici i = 1 et 2, mais il peut prendre toute autre valeur supérieure à deux) raccordées à des terminaux de communications UEi-k (ici i = 1 et 2, et k = 1 et 2, mais ils peuvent prendre toute autre valeur supérieure ou inférieure à deux) et couplées entre-elles par au moins un satellite de communications SAT.

Dans l'exemple illustré, les terminaux de communications sont des équipements d'utilisateurs UE1 et UE2-k, qui peuvent être fixes ou mobiles (et généralement à faible rapport Signal à Bruit). Mais, il pourrait s'agir de tout type de terminal de communications capable d'échanger des données avec d'autres terminaux ou équipements de réseau, comme par exemple des téléphones mobiles ou fixes, des télécopieurs, des assistants numériques personnels (ou PDA pour « Personal Digital Assistant »), ou des serveurs de fournisseurs de contenus (ou ASP pour « Application Service Provider »).

Par ailleurs, les équipements d'utilisateurs UE2-k sont ici couplés au routeur R2 d'un réseau privé, tel qu'un LAN (ou « Local Area Network »). Bien entendu, les terminaux de communications UE2-k pourraient ne pas être raccordés à un réseau privé ou public, quel qu'en soit le type. Ils peuvent en effet être couplés, comme le terminal de communications UE1 à l'une des stations de communications STi du réseau, directement, par exemple par un bus, ou indirectement, par exemple via un hub.

Il est important de noter qu'un terminal de communications UEi et une station de communications STi peuvent être regroupés dans un seul et même équipement. Cela peut notamment être le cas lorsque la station de communications est réalisée sous la forme d'une carte PCI enfichée dans un terminal de communications de type PC.

En outre, on considère dans ce qui suit que les stations de communications STi sont des terminaux de satellite agencés de manière à échanger des trames de données (par exemple de niveau trois IP) encapsulées selon un protocole de transport de niveau un (1), c'est-à-dire correspondant à la couche physique dans le modèle en couches OSI.

Chaque terminal de satellite STi est ici équipé d'un modem Mi d'émission/réception comprenant un démodulateur DM1, équipé d'un premier dispositif D1-i selon l'invention (ou filtre de réception) dédié au filtrage de paquets de données encapsulés reçus, et un modulateur MD2, classique ou équipé d'un second dispositif D2-i selon l'invention (ou filtre d'émission) dédié au filtrage de paquets de données encapsulés à émettre.

Chaque premier dispositif (ou filtre de réception) D1-i constitue un filtre de réception, alimenté en paquets encapsulés reçus, et alimentant en symboles bruités (constituant le corps des paquets et sur lesquels on reviendra plus loin) un module de récupération de rythme et de porteuse du démodulateur DM1. Un tel filtre de réception peut être soit placé en amont du démodulateur DM1 soit intégré à celui-ci, comme on le verra plus loin. Par ailleurs, chaque second dispositif D2-i constitue un filtre d'émission, alimenté par le modulateur MD2 en paquets encapsulés à émettre. Un tel filtre d'émission peut être soit placé en aval du modulateur MD2 soit intégré à celui-ci, au niveau de sa sortie.

Dans ce qui suit, on considère que chaque modem Mi comprend des premier D1-i et second D2-i dispositifs de filtrage. Mais, il pourrait en être autrement. En effet, certains au moins des modems peuvent comporter un démodulateur DM1 équipé d'un premier dispositif de filtrage (ou filtre de réception) et d'un modulateur classique.

L'invention part d'une constatation qui va à l'encontre de certains enseignements traditionnels.

Dans les transmissions de paquets de données par modulation de phase mono-amplitude (ou M_PSK) ou multi-amplitudes (ou QAM) chaque paquet de données est encapsulé dans un cadre (ou overhead) de transmission, correspondant à la couche physique de niveau un. Les données d'un paquet, dites données d'informations utiles sont des symboles représentables par des échantillons. De même, le cadre comprend des échantillons, dits primaires, représentatifs de symboles réservés aux temps de montée et aux temps de descente du filtre canal, dits symboles primaires, et des échantillons, dits secondaires, représentatifs de symboles de référence, dits symboles secondaires, insérés dans les informations utiles du paquet.

Les symboles utiles et les symboles secondaires constituent un paquet de données de « payload ». Les échantillons représentatifs des données de payload sont encadrés, en amont et en aval (c'est-à-dire sur les bords du paquet), par des échantillons primaires représentatifs d'un nombre prédéfini de symboles primaires. Le nombre de symboles primaires amont est généralement égal au nombre de symboles primaires aval. Il est généralement compris entre 1,5 et 4.

L'insertion et l'extraction des symboles primaires et secondaires s'effectuent dans les modulateur MD2-i et démodulateur DM1-i des modems Mi.

Plus précisément, un modulateur MD2 comprend, d'une première part, un module MI1 recevant les données utiles encodées et chargé d'insérer dans ces données utiles des symboles secondaires de positions et valeurs choisies de manière à constituer des paquets de payload, d'une deuxième part, un module MI2 alimenté par la sortie du module d'insertion MI1 et chargé d'insérer en amont et/ou en aval (ou bords) du paquet de payload des symboles primaires de valeurs nulles, d'une troisième part, un module MM alimenté par la sortie du second module d'insertion MI2 et chargé d'effectuer une modulation en quadrature par voies I et Q des symboles reçus, et d'une quatrième part, un second dispositif D2-i selon l'invention alimenté par le module de modulation MM et assurant le filtrage en émission. La sortie du second dispositif D2-i constitue la sortie du modulateur MD2 qui alimente ensuite une chaîne dite « FI-RF ».

Par ailleurs, un démodulateur DM1 comprend, d'une première part, un premier dispositif D1-i selon l'invention (ou filtre de réception), recevant les paquets encapsulés issus d'une chaîne dite « RF-FI » et d'un convertisseur analogique/numérique, et comportant un module de filtrage MFR délivrant des symboles bruités (constituant le corps des paquets et sur lesquels on reviendra plus loin), d'une deuxième part, un module MR de récupération de rythme et de porteuse comportant un premier étage MR1, alimenté par le module de filtrage MFR en symboles bruités et chargé de récupérer la position du paquet comportant lesdits symboles bruités et le rythme et de supprimer les symboles primaires, et un second étage MR2 chargé d'affiner les paramètres horaires et de récupérer les paramètres de la porteuse et de supprimer les symboles secondaires, et d'une quatrième part, un module de décision MDS alimenté par le module de récupération de rythme et de porteuse MR et chargé de prendre des décisions dites « symboliques pondérées », le cas échéant de manière à délivrer en sortie des données utiles à décoder. L'ordre des étages MR1, MR2 et de suppression des symboles primaires et secondaires MFR est donné à titre indicatif. C'est celui qui est choisi préférentiellement, mais de façon non obligatoire.

Comme le sait l'homme de l'art, l'émission à puissance et/ou bande de fréquence constante(s) de tous les symboles de payload d'un paquet impose de générer une énergie par symbole sensiblement constante.

Or, contrairement à ce qui se fait couramment, pour obtenir un taux d'erreur symbole (ou SER pour « Symbol Error Rate ») sensiblement plat, quelle que soit la position du symbole considéré au sein d'un paquet, ce n'est pas l'énergie utile Es (c'est-à-dire l'énergie ou puissance utile par symbole) de chaque symbole qui doit être maintenue sensiblement constante tout au long d'un paquet, mais le rapport signal à bruit Es/N₀ de chaque symbole. N₀ représente ici la densité spectrale de puissance du bruit.

Par conséquent, pour moduler efficacement les paquets de données encapsulés à émettre, il faut maximiser, en réception, le rapport signal à bruit Es/N₀ de chaque symbole et non pas nécessairement l'énergie (ou puissance) utile Es des symboles reçus.

Par ailleurs, force est de constater qu'aujourd'hui les points de fonctionnement des parties réceptrices des modems, considérés en terme de rapport signal à bruit Es/N₀, sont faibles, typiquement inférieurs ou égaux à 1 dB. Il n'est donc pas utile d'émettre de l'énergie (ou puissance) utile lorsque l'amélioration sur le rapport signal à bruit Es/N₀ associé est négligeable. Or, au sein d'un paquet les échantillons à énergie utile faible sont les échantillons primaires qui définissent les temps de montée et de descente du paquet qu'ils encapsulent, alors que la densité spectrale de puissance de bruit N₀ est la même que celle des échantillons représentatifs des symboles de payload. De surcroît, les positions occupées par les échantillons primaires, qui encadrent les symboles du paquet, sont celles aux niveaux desquelles viennent s'ajouter à la densité spectrale de puissance du bruit N₀ des parasites dus aux commutations temps/fréquence des paquets.

Partant de ces constatations, l'invention propose de tronquer au niveau de la réception, en entrée du module de filtrage MFR du filtre de réception D1, la puissance utile bruitée des échantillons primaires représentatifs de l'un au moins des symboles primaires placés sur le bord amont et/ou le bord aval de chaque paquet reçu, de manière à obtenir pour chaque symbole k du paquet filtré reçu une énergie par symbole Esₖ telle que le rapport Esₖ/N₀, en sortie du module de filtrage MFR du filtre de réception D1 d'un démodulateur DM1, soit sensiblement constant quel que soit le symbole dudit paquet reçu.

Un tel filtrage en réception s'effectue par exemple en mettant à zéro (0) le niveau d'énergie (ou de la puissance utile bruitée) des échantillons primaires constituant l'un au moins des symboles primaires d'un flot incident de paquets encapsulés. En variante, on peut directement modifier les coefficients utilisés dans le module de filtrage MFR du filtre de réception D1 pour traiter les symboles primaires de bord des paquets encapsulés reçus.

Selon l'invention, le traitement effectué au niveau des récepteurs peut être également associé à un traitement préliminaire au niveau de l'émetteur. Ce traitement préliminaire consiste à tronquer en sortie de la fonction de modulation MM proprement dite, l'émission de la puissance utile des échantillons primaires représentatifs de l'un au moins des symboles placés sur le bord amont et/ou le bord aval de chaque paquet à émettre, de manière à obtenir pour chaque symbole k du paquet filtré de payload (symboles utiles et secondaires) reçu une énergie par symbole Esₖ telle que le rapport Esₖ/N₀, en sortie du module de filtrage MFR d'un démodulateur DM1, soit sensiblement constant quel que soit le symbole dudit paquet reçu.

En diminuant de la sorte le nombre d'échantillons émis par le modulateur MD2 d'un émetteur, on gagne en efficacité de transmission.

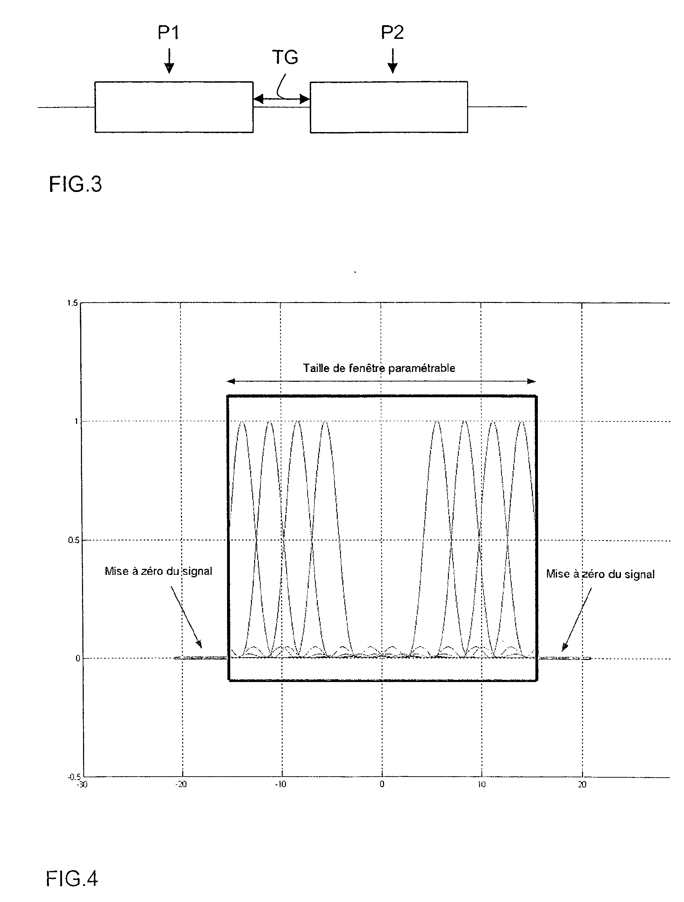

Par ailleurs, en plaçant ainsi à un niveau d'énergie (ou de puissance) utile nul tout ou partie des échantillons primaires placés sur le bord amont et/ou le bord aval d'un paquet à émettre, on transforme des signaux, dont le diagramme d'énergie est représenté de façon très simplifiée sur la figure 2, en signaux d'allure générale rectangulaire, dont le diagramme d'énergie est représenté de façon très simplifiée sur la figure 3.

L'exemple illustré sur la figure 3, et détaillé avant sommation des énergies symbole sur la figure 4, correspond à une situation dans laquelle tous les échantillons primaires amont et aval ont été supprimés avant l'émission. En d'autres termes, l'énergie utile des symboles primaires qui représentaient le temps de montée TM et le temps de descente TD qui existaient avant le filtrage en émission selon l'invention (voir figure 2) a été mise à zéro, comme cela est matérialisé sur la figure 4 par les traits continus horizontaux MZS. De façon plus générale, sur la figure 4, TF matérialise par ailleurs la taille variable de la fenêtre (ou place) occupée par les symboles de payload et primaires du paquet transmis.

Le temps de garde effectif TGE, qui était auparavant égal à la somme des temps de montée TM et de descente TD et du temps de garde théorique TG, peut ainsi être réduit au seul temps de garde théorique TG. Cela permet de réduire les délais entre paquets, et par conséquent soit d'augmenter le débit de paquets transmis, soit de diminuer la bande passante, soit encore d'obtenir un compromis entre la réduction des délais entre paquets, la réduction de la bande passante et l'augmentation du débit de paquets transmis. Cela permet en outre d'obtenir un gain d'au moins 0,4 dB en émission, dès que le paquet contient moins de 100 symboles.

Certes, l'émission d'énergie parasite qui est générée lors de la commutation des paquets encapsulés, en présence de signaux à profil d'énergie rectangulaire, peut dans le cas d'une émission multicanaux perturber de façon transitoire des paquets contenus dans les canaux voisins. En d'autres termes, cela peut nécessiter un accroissement de l'écartement fréquentiel des canaux utilisés pour la transmission, et donc induire une perte d'efficacité fréquentielle. Cependant, cette perturbation peut être facilement contrôlée par le biais du plan multifréquences/TDMA du satellite SAT. En outre, ce bruit transitoire s'avère, dans la pratique, négligeable, et ne nécessite pas un élargissement des canaux du plan de fréquence. De plus, l'efficacité spectrale globale peut bénéficier d'effet(s) compensateur(s) introduit(s) par d'autres éléments de la chaîne de transmission, placés en aval du démodulateur DM1 des symboles reçus, et notamment des entrelaceurs, des codes correcteurs d'erreurs, des gestionnaires de codes correcteurs d'erreurs et des mécanismes de répétition, capables de lisser le taux d'erreur paquets utilisateur.

Pour ce qui concerne le filtrage de paquets encapsulés reçus, l'invention permet d'éliminer tout ou partie du bruit thermique et des bruits parasites générés par les commutations du réseau et/ou un brouillage externe, sans que cela n'entraîne de réduction de la capacité de recherche de synchronisation et de position des paquets dans le module MR du démodulateur DM1, car le nombre des échantillons primaires et la position supposée du paquet encapsulé reçu peuvent être commandés dans le récepteur. Il n'y a donc pas de contrainte supplémentaire sur la précision de la synchronisation du réseau.

Comme indiqué précédemment, la mise en oeuvre du filtrage selon l'invention, côté émission, peut être faite à l'aide d'un second dispositif de filtrage D2-i (ou filtre d'émission) implanté en aval du module de modulation MM dans le modulateur MD2 d'un modem Mi d'un terminal de satellite (STi), comme illustré sur la figure 1, ou en sortie de ce modulateur MD2.

Ce second dispositif D2-i comprend un module de traitement PM2 chargé, lorsqu'un paquet de données encapsulé, issu d'un équipement d'utilisateur (par exemple UE1), doit être émis (ici par un terminal de satellite (par exemple ST1)), de tronquer en sortie du module de filtrage d'émission D2-2 du modulateur MD2 du modem Mi, les valeurs des échantillons primaires représentatifs de l'un au moins des symboles de payload placés sur le bord amont et/ou le bord aval de chaque paquet à émettre.

Ainsi, chaque symbole k du paquet de payload filtré en émission par le module de traitement PM2 du second dispositif D2-i présente en sortie du module de filtrage MFR du premier dispositif D1-j du démodulateur DM1 du modem récepteur Mj, une énergie par symbole Esₖ telle que le rapport Esₖ/N₀ est sensiblement constant quel que soit le symbole du paquet reçu.

Ce second dispositif D2-i peut être agencé de manière à effectuer un filtrage soit de façon analogique ou semi-analogique, soit de façon numérique.

Dans le cas analogique ou semi-analogique, adapté à un filtrage de caractéristiques identiques et de durée constante pour tous les symboles du paquet, son module de traitement PM2 peut comprendre deux synthétiseurs agencés en mode « push-pull » de façon à commuter alternativement pour émettre des paquets encapsulés consécutifs avec un recouvrement temporel choisi entre le temps de descente TD associé à un paquet P1 et le temps de montée TM associé au paquet suivant P2, compte tenu d'un temps de garde TG choisi entre ces paquets P1 et P2.

Ce recouvrement temporel peut être ajustable de manière à n'émettre sur le support de transmission que pendant la durée (n+2r)Tₛ (où Tₛ est la durée d'un symbole, n est le nombre de symboles secondaires et utiles, et 2r est le nombre de symboles primaires résiduels émis sur le support de transmission, avec la condition 0<2r<2dₕ où 2dₕ est la durée de la réponse impulsionnelle du filtrage canal, exprimée en nombre de symboles).

Chaque synthétiseur est programmé de manière à produire une sortie sur la durée (n+2dₕ)Tₛ (ce qui correspond à un filtrage classique de tous les symboles du paquet avec un paramétrage unique). Afin de n'émettre que pendant la durée (n+2r)Tₛ sur le canal de transmission, le silence peut être obtenu en commutant alternativement les sorties des deux synthétiseurs sur une charge adaptée au début et à la fin de chaque paquet pendant une durée minimale de (dₕ-r) symboles.

Dans un mode de réalisation particulier, chaque synthétiseur est programmé de manière à commencer à filtrer un paquet encapsulé P2 (constitution de son temps de montée) avant la descente du filtrage du paquet encapsulé P1 (constitution du temps de descente de P1), au temps de garde théorique TG près.

Un tel module de traitement analogique ou semi-analogique de sauts de fréquence peut être implanté, par exemple, sur la carte radio d'un modem de type FH/FSK de la société TELSPACE, (compatible avec le STANAG 4376).

Dans le cas numérique, le module de traitement PM2 peut comprendre un unique synthétiseur, bâti autour d'un composant à synthèse numérique (ou DDS pour « Direct Digital Synthesizer »), adapté à la génération de formes d'onde variables à l'échantillon près. Ce synthétiseur comprend, par exemple, un composant DDS, commandable en fréquence et en phase, suivi d'un convertisseur numérique analogique (ou DAC pour « Digital to Analog Converter »), commandé en amplitude, dont l'ensemble réalise la fonction de modulation et de filtrage et dont la commande en fréquence conventionnelle réalise une fonction de saut de fréquence (ou évasion de fréquence (EVF)). Les suites des commandes phase / amplitude sur des durées d'un symbole constituent des « préfixes ». Les préfixes sont définis différemment selon qu'ils concernent les symboles de bord ou de centre du paquet. Un module de traitement numérique de ce type peut être implanté, par exemple, dans le modulateur MMB Syracuse II (modulateur et multiplexeur de balise à commandes fréquentielle et temporelle numériques) de la société ALCATEL SPACE.

Comme indiqué précédemment, la mise en oeuvre du filtrage selon l'invention, côté réception, peut être faite à l'aide d'un premier dispositif de filtrage D1-i (ou filtre de réception) implanté dans le démodulateur DM1 d'un modem Mi d'un terminal de satellite (STi), comme illustré sur la figure 1.

Lorsque les modems Mi du réseau sont équipés pour la partie réception d'un premier dispositif D1 selon l'invention, il n'est pas nécessaire qu'ils comprennent pour la partie émission un second dispositif D2 selon l'invention.

Le premier dispositif D1-i est chargé, lorsqu'un paquet de données encapsulé, issu d'un équipement d'utilisateur (par exemple UE2-1), et atténué par un canal de transmission bruité, voire amplifié par des répéteurs, vient d'être reçu (ici par un terminal de satellite (par exemple ST1)), de filtrer les échantillons de ce paquet de données avec des caractéristiques (ou coefficients) dépendant(e)s de la position des échantillons dans le paquet, afin d'alimenter le module de récupération de rythme et de porteuse MR.

Il comprend à cet effet le module de filtrage MFR, présenté précédemment, et un module de traitement PM1 qui reçoit les échantillons du paquet encapsulé de la chaîne RF-FI, et qui restitue au module MFR une quantité qui correspond, au rapport d'échantillonnage près, à n+2dₕ symboles au minimum lorsque le module de filtrage MFR est invariant dans le temps, ou à n+2r symboles au minimum, lorsque le module de filtrage MFR est adapté à la position du symbole à filtrer.

La sortie du module de filtrage MFR restitue des échantillons au module de récupération de rythme et de porteuse MR du démodulateur DM1. Pour une hypothèse d'heure (ou de position) de paquet donnée, ces échantillons sont proportionnels au nombre n des symboles de payload (utiles et secondaires).

Dans un premier mode de réalisation, le module de traitement PM1 est agencé de manière à ne pas prendre en compte certains des échantillons primaires bruités représentatifs de l'encapsulation, éventuellement tous, en amont et/ou en aval de chaque paquet (2dₕ). Pour cela, il tronque la puissance (utile bruitée) des échantillons primaires représentatifs de l'un au moins des symboles placés sur le bord amont et/ou le bord aval de chaque paquet reçu, et alimente l'entrée du module de filtrage MFR en paquets comprenant des échantillons primaires dont la puissance est tronquée. Toutefois, chaque symbole k du paquet (payload), filtré par le module de traitement PM2 du modulateur MD2 de l'émetteur, présente à l'entrée du module de récupération de rythme et de porteuse MR (et donc en sortie du module de filtrage MFR) une énergie par symbole Esₖ telle que le rapport Esₖ/N₀ est sensiblement constant quel que soit le symbole du paquet.

Cela revient à adresser au module de récupération de rythme et de porteuse MR du démodulateur DM1 des échantillons primaires de puissance nulle, en lieu et place du signal incident.

Le décalage de la position du paquet par rapport à la position attendue peut être effectué sur plusieurs symboles voisins, sans que cela ne dégrade l'efficacité du filtrage. En d'autres termes, il n'est pas nécessaire d'avoir une bonne connaissance de la position du paquet et du rythme symbole, mais il faut cependant occulter les échantillons primaires adéquats à l'entrée du filtre de réception.

Le filtrage étant le produit de convolution de la réponse impulsionnelle du filtre par les échantillons de signal reçus, il est possible de prévoir un second mode de réalisation du filtre de réception (ou premier dispositif) D1 dans lequel le module de traitement PM2 modifie les coefficients utilisés par le module de filtrage MFR pour traiter les échantillons primaires représentatifs des symboles primaires des paquets reçus, plutôt que de modifier les échantillons incidents bruités reçus.

Le premier D1 et le second D2 dispositifs de filtrage, et plus précisément leurs modules de traitement PM1 et PM2, peuvent être réalisés sous la forme de circuits électroniques, de modules logiciels (ou informatiques), ou d'une combinaison de circuits et de logiciels.

L'invention s'applique à tout type de transmission de données par modulation à nombre réduit d'états d'amplitude et/ou de phase. Cependant, l'invention est particulièrement intéressante dans le cas de la modulation de phase mono-amplitude (ou M_PSK), quel que soit le nombre (M) de positions de phase, étant donné que sa contrainte principale est la puissance. Dans ce cas, il est néanmoins préférable de fonctionner avec un nombre M égal à 2, 4 ou 8, c'est-à-dire en mode 2PSK, 4PSK ou 8PSK. Mais, l'invention peut également être adaptée à la modulation de phase multi-amplitudes (ou QAM).

Par ailleurs, l'invention est plus particulièrement adaptée, bien que de façon non limitative à la transmission de paquets comportant un petit nombre de symboles de payload (utiles et secondaires), typiquement inférieur ou égal à 100 symboles, puisque le coût du cadre entre symboles primaires et symboles secondaires devient du même ordre de grandeur (soit environ 0,4dB chaque).

En outre, l'invention peut trouver de nombreuses applications, notamment dans le domaine des liaisons protégées, civiles ou militaires, pour lesquelles une modulation numérique de phase à sauts de fréquence, permettant une transmission en environnement difficile ou de type anti-scintillation post-nucléaire, et autorisant néanmoins des mesures de distance, est requise, ou dans le domaine de la transmission de signalisation protégée (par exemple de paquets de synchronisation fréquentielle ou temporelle, ou de paquets de contrôle de PIRE (Puissance Isotrope Rayonnée Equivalente), ou de monitoring, ou encore de télémesure/télécommande sur une ou deux porteuses). Ainsi, l'invention peut être utilisée dans la transmission satellite de tous paquets de trafic courts, avec une efficacité spectrale globale paramétrable, ou dans le cas d'une transmission de trafic de type multifréquences/TDMA (ou MF/TDMA).

De plus, grâce à l'invention, lorsque la spécification de la taille des paquets est déjà effectuée, on peut avantageusement contribuer à l'augmentation du nombre de symboles secondaires au détriment des symboles primaires, afin de renforcer l'acquisition et la synchronisation du récepteur dans des conditions difficiles et/ou de brouillage.

L'invention ne se limite pas aux modes de réalisation de réseau, de station de communications, de terminal de communications et de dispositifs de filtrage décrits ci-avant, seulement à titre d'exemple, mais elle englobe toutes les variantes que pourra envisager l'homme de l'art dans le cadre des revendications ci-après.

## Revendications

1. Procédé de filtrage de paquets de données-symboles d'un réseau de communications, chaque paquet (P) comportant des symboles utiles encapsulés dans un cadre de couche physique de signal comportant des échantillons, dits primaires, représentatifs de symboles de temps de montée (TM) et de descente (TD), et des échantillons, dits secondaires, représentatifs de symboles de référence, lesdits échantillons primaires étant placés en amont et/ou en aval de chaque paquet encapsulé (P), **caractérisé en ce qu'**il consiste à réception d'un paquet de données encapsulé (P) à tronquer la puissance utile bruitée des échantillons primaires représentatifs de l'un au moins des symboles primaires placés en amont et/ou en aval dudit paquet reçu, afin d'obtenir pour chaque symbole (k) du paquet reçu une énergie par symbole (Esₖ) [telle que le rapport (Esₖ/N₀) entre ladite énergie et la densité spectrale de puissance de bruit (N₀) en sortie d'un filtre de réception (D1) d'un démodulateur (DM1) du réseau, soit sensiblement constant quel que soit le symbole dudit paquet reçu.]

2. Procédé selon la revendication 1, **caractérisé en ce que** la troncature s'effectue par une mise à zéro de la puissance desdits échantillons primaires d'un paquet reçu.

3. Procédé selon la revendication 1, **caractérisé en ce que** la troncature consiste à ne pas prendre en compte lesdits échantillons primaires à l'entrée dudit filtre de réception (D1).

4. Procédé selon la revendication 1, **caractérisé en ce que** la troncature s'effectue par une modification des coefficients dudit filtre de réception (D1), utilisés pour lesdits symboles primaires amont et/ou aval reçus.

5. Procédé selon l'une des revendications 1 à 4, **caractérisé en ce qu'**il comprend un pré-traitement consistant à tronquer au niveau de l'émission, en aval de la fonction de modulation, la puissance utile des échantillons primaires représentatifs de l'un au moins des symboles placés en amont et/ou en aval du paquet à émettre.

6. Procédé selon la revendication 5, **caractérisé en ce que** la troncature de paquets (P) à l'émission s'effectue en mode de type « push-pull » par recouvrement temporel entre temps de montée (TM) et temps de descente (TD), compte tenu d'un temps de garde (TG) choisi entre deux paquets encapsulés consécutifs.

7. Procédé selon la revendication 5, **caractérisé en ce que** la troncature de paquets (P) à l'émission s'effectue par un filtrage numérique, de durée et de valeur modulables, à l'aide d'un module à synthétiseur numérique direct.

8. Dispositif de filtrage de paquets de données-symboles reçus (D1), pour un démodulateur (DM1) d'un modem (Mi) d'un réseau de communications, chaque paquet comportant des symboles utiles encapsulés dans un cadre de couche physique comportant des échantillons, dits primaires, représentatifs de symboles de temps de montée (TM) et de descente (TD), et des échantillons, dits secondaires, représentatifs de symboles de référence, lesdits échantillons primaires étant placés en amont et/ou en aval de chaque paquet encapsulé (P), et ledit dispositif comportant des moyens de filtrage (MFR) de symboles contenus dans des paquets reçus, **caractérisé en ce qu'**il comprend des moyens de traitement (PM1) agencés, chaque fois qu'un paquet de données encapsulé est reçu, pour tronquer la puissance utile bruitée des échantillons primaires représentatifs de l'un au moins des symboles placés en amont et/ou en aval dudit paquet reçu, de manière à obtenir pour chaque symbole (k) du paquet reçu une énergie par symbole (Esₖ) telle que le rapport (Esₖ/N₀) entre ladite énergie (Esₖ) et la densité spectrale de puissance de bruit (N₀), en sortie desdits moyens de filtrage (MFR), soit sensiblement constant quel que soit le symbole dudit paquet reçu.

9. Dispositif selon la revendication 8, **caractérisé en ce que** lesdits moyens de traitement (PM1) sont agencés pour effectuer la troncature par une mise à zéro de la puissance utile bruitée desdits échantillons primaires d'un paquet reçu.

10. Dispositif selon la revendication 8, **caractérisé en ce que** lesdits moyens de traitement (PM1) sont agencés pour ne pas délivrer auxdits moyens de filtrage (MFR) lesdits échantillons primaires dont la puissance à été tronquée.

11. Dispositif selon la revendication 8, **caractérisé en ce que** lesdits moyens de traitement (PM1) sont agencés pour effectuer la troncature par une modification des coefficients de filtrage utilisés par lesdits moyens de filtrage (MFR) pour filtrer en réception lesdits symboles dudit paquet reçu.

12. Dispositif de filtrage de paquets de données-symboles à émettre (D2), pour un modulateur (MD2) d'un modem (Mi) d'un réseau de communications, chaque paquet comportant des symboles utiles encapsulés dans un cadre de couche physique comportant des échantillons, dits primaires, représentatifs de symboles de temps de montée (TM) et de descente (TD), et des échantillons, dits secondaires, représentatifs de symboles de référence, dits symboles secondaires, lesdits échantillons primaires étant placés en amont et/ou en aval de chaque paquet encapsulé (P), **caractérisé en ce qu'**il comprend des moyens de traitement (PM2) agencés, chaque fois qu'un paquet de données encapsulé (P) doit être émis, pour tronquer l'émission de la puissance utile des échantillons primaires représentatifs de l'un au moins des symboles placés en amont et/ou en aval dudit paquet à émettre, de manière à obtenir pour chaque symbole (k) du paquet, en sortie de moyens de filtrage (MFR) d'un démodulateur (DM1), une énergie par symbole (Esₖ) telle que le rapport (Esₖ/N₀) entre ladite énergie (Esₖ) et la densité spectrale de puissance de bruit (N₀) soit sensiblement constant quel que soit le symbole dudit paquet reçu.

13. Dispositif selon la revendication 12, **caractérisé en ce que** lesdits moyens de traitement (PM2) comprennent deux synthétiseurs agencés en mode « push-pull » de manière à émettre de façon alternée des paquets encapsulés consécutifs avec un recouvrement temporel choisi entre le temps de descente (TD) d'un paquet (P1) et le temps de montée (TM) du paquet suivant (P2), compte tenu d'un temps de garde (TG) choisi entre lesdits paquets.

14. Dispositif selon la revendication 13, **caractérisé en ce que** lesdits synthétiseurs sont agencés pour commencer à émettre un paquet encapsulé (P2) lorsque le temps de garde (TG) entre ce paquet (P2) et le paquet précédent (P1) est à moitié écoulé, de sorte que tous les échantillons primaires représentatifs de symboles de temps de montée et de descente soient placés audit niveau d'énergie nul.

15. Dispositif selon la revendication 12, **caractérisé en ce que** lesdits moyens de traitement (PM2) comprennent un synthétiseur numérique direct (DDS) chargé d'effectuer un filtrage numérique, de durée modulable.

16. Modem (Mi), **caractérisé en ce qu'**il comprend un démodulateur (DM1) équipé d'un dispositif de filtrage de paquets de données reçus (D1) selon l'une des revendications 8 à 11, et/ou un modulateur (MD2) équipé d'un dispositif de filtrage de paquets de données à émettre (D2) selon l'une des revendications 12 à 15.

17. Station de communications (STi), **caractérisée en ce qu'**elle comprend un modem (Mi) selon la revendication 16.

18. Station selon la revendication 17, **caractérisée en ce qu'**elle est agencée sous la forme d'un terminal de satellite.

19. Terminal de communications, **caractérisé en ce qu'**il comprend un modem (Mi) selon la revendication 16.

20. Réseau de communications, **caractérisé en ce qu'**il comprend au moins une station de communications (STi) selon l'une des revendications 17 et 18.

21. Utilisation des procédé, dispositif de filtrage de paquets de données à émettre (D2), dispositif de filtrage de paquets de données reçus (D1), modem (Mi), terminal de communications et station de communications (STi) selon l'une des revendications 1 à 19, pour la transmission de données par modulation de phase à nombre réduit d'états d'amplitude.
